# NEUE EUROPÄISCHE PATENTSCHRIFT

(11) **EP 0 839 823 B2**
(45) Veröffentlichungstag und Bekanntmachung des Hinweises auf die Entscheidung über den Einspruch: **09.01.2008**
(45) Hinweis auf die Patenterteilung: 10.12.2003
(21) Anmeldenummer: 97118616.8
(22) Anmeldetag: 27.10.1997
(51) Int. Cl.: C07F 17/00, C08F 10/00

(54) **Metallocene**
Metallocenes
Métallocènes

(30) Priorität: 31.10.1996 DE 19644039
(43) Veröffentlichungstag der Anmeldung: 06.05.1998
(60) Teilanmeldung: 03005762.4
(73) Patentinhaber: Basell Polyolefine GmbH, 50389 Wesseling (DE)
(72) Erfinder: Hübscher, Erich, Dl., 65779 Kelkheim (DE); Zenk, Roland, Dr., 65812 Bad Soden (DE)

(56) Entgegenhaltungen:
- EP-A- 0 344 887
- EP-A- 0 490 256
- EP-A- 0 611 773
- WO-A-95/27717
- US-A- 5 331 054
- Tetrahedron Letters 37(1996), 7139-42
- Macromol.Symp.98(1995), 223-31
- J.Am.Chem.Soc.112,(1990),2030-31
- J.Pol.Sci.Part A:Pol.Chem.,32(1994,2817-24
- Macromol.,28,(1995),3771-78
- Macromol.,28,(1995), 3074-79
- Polymer Bulletin 28,(1992), 41-45
- Macromol., 25(1992), 1242-53
- New J.Chem.,14,(1990)499-503
- Nachrichten aus Chemie und Laboratorien 41,(1993),Nr.12,1441-49
- Chemie in unserer Zeit 28,(19949, Nr.4,197-208
- Höchst-Presse-Information,20.06.1995, 1-2

## Beschreibung

Die vorliegende Erfindung betrifft hydrierte und teilhydrierte Metallocene.

Hydrierte Metallocene wie Ethylenbis(tetrahydroindenyl)zirkoniumdichlorid und Dimethylsilandiylbis(tetrahydroindenyl)zirkoniumdichlorid sind aus J. Am. Chem. Soc. (1996), 118, 2105, J. Mol. Catal. A. Chem. (1995), 102, 59, EP-A-0 643 079, Macromolecules (1994), 27, 4477, Macromolecules (1996), 29, 2331 und JP-A-07 292 019 bekannt. Sie eignen sich für die Herstellung von Polyolefinen wie isotaktischem Polypropylen, Copolymeren und Elastomeren. Daneben sind eine Reihe weiterer hydrierter Metallocene bekannt, vgl. EP-A-0 581 754, EP-A-529 908, Organometallics (1993), 12, 4391, JP-A-07 041 521 und Chem. Ber. (1994), 127, 2417. Hydrierte und teilhydrierte Metallocenen sind als Katalysatorvorstufen für die Polymerisation von Olefinen beschrieben, vgl. J. Organomet. Chem. (1995), 497, 181, Angew. Chem. (1992), 104, 1373, EP-A-0 344 887, J. Mol. Catal. A: Chem. (1995), 102, 59, EP-A-0 185 918, EP-A-0 537 686 und EP-A-485 821.

Bei der Synthese von hydrierten oder teilhydrierten Metallocenen geht man in der Regel von den entsprechenden hydrierbaren Metallocenen mit aromatischen Liganden aus. So kann aus Dimethylsilandiylbisindenylzirkoniumdichlorid durch Hydrierung das Octahydroderivat Dimethylsilandiylbis(4,5,6,7-tetrahydroindenyl)zirkoniumdichlorid hergestellt werden. Solche und ähnliche Reaktionen sind vielfach beschrieben, vgl. JP-A- 06 287 224, EP-A-344 887, J. Organomet. Chem. (1995), 497, 181, Organometallics (1991), 10, 1501 und J. Organomet. Chem. (1988), 342, 21.

Die bekannten Synthesevorschriften zur Hydrierung des aromatischen Ligandgerüsts von Metallocenen beschreiten im Prinzip alle den gleichen Weg. Das nichthydrierte Metallocen wird in Dichlormethan gelöst oder suspendiert und in Gegenwart von Platinschwarz oder Platindioxid unter hohem Wasserstoffdruck hydriert, vgl. J. Organomet. Chem. (1988), 342, 21 und EP-A-344 887.

Dichlormethan und andere chlorierte Lösungsmittel können nur unter Einhaltung strenger Sicherheits- und Umweltauflagen in größeren Mengen eingesetzt werden. In chlorierten Lösungsmitteln können nur schwach aktivierende Hydrierkatalysatoren wie Platinschwarz oder Platindioxid verwendet werden, um Dehalogenierungsreaktionen zu vermeiden. Die Dehalogenierungsreaktionen führen zur Zersetzung des Produkts und zu Korrosionsproblemen.

Die Aufgabe der vorliegenden Erfindung liegt darin neue hydrierte und teilhydrierte Metallocene bereitzustellen.

Die Aufgabe der vorliegenden Erfindung wird durch Metallocene mit der allgemeinen Formel (I) gelöst.

Die vorliegende Erfindung betrifft somit Metallocene der Formel (I) 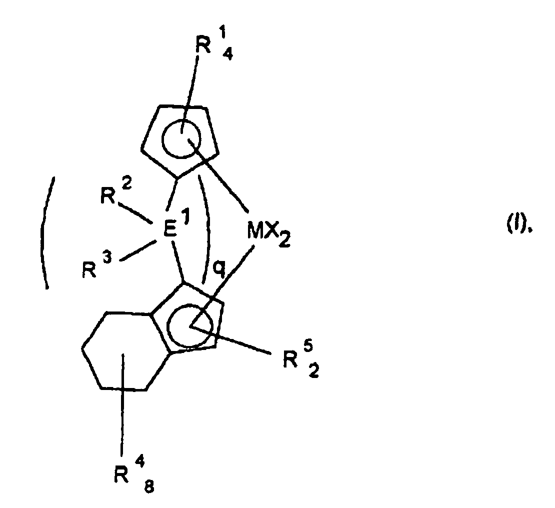 wobei
- M: Ti, Zr und Hf bedeutet,
- X: gleich oder verschieden, ein Wasserstoffatom, eine C₁-C₄₀-Kohlenwasserstoffgruppe wie eine C₁-C₁₀-Alkyl-, C₁-C₁₀-Alkoxy-, C₆-C₁₀-Aryl-, C₆-C₁₀-Aryloxy-, C₂-C₁₀-Alkenyl-, C₇-C₄₀-Arylalkyl-, C₇-C₄₀-Alkylaryl- oder C₈-C₄₀-Arylalkenylgruppe, OH-Gruppe, ein Halogenatom oder ein Pseudohalogen wie Nitril bedeutet,
- R¹ bis R⁵: jeweils gleich oder verschieden sind und unabhängig voneinander ein Wasserstoffatom, ein C₁-C₃₀-Kohlenwasserstoffrest wie C₁-C₂₀-Alkyl oder C₆-C₂₀-Aryl, oder einen kohlenstoffhaltigen Rest mit 1 bis 10 C-Atomen mit einem oder mehreren Heteroatomen der Reihe O, N, Si, Ge, P bedeuten, wobei je zwei benachbarte Reste R⁴ mit den sie verbindenden Kohlenstoffatomen ein Ringsystem bilden können,
- E¹: ein Kohlenstoff-, Silizium-, Germanium- oder Zinnatom, bevorzugt ein Kohlenstoffatom bedeuten und
- q: gleich 1 ist, ausgenommen (Tetrahydroindenyl)-dimethylsilyl-(3-n-propylcyclopentadienyl)-zirkoniumdichlorid oder *-*dimethyl.

Bevorzugt sind Metallocene, wobei
- M: gleich Zirkonium oder Hafnium ist,
- X: eine C₁-C₄-Alkyl-, C₁-C₃-Alkoxy-, C₆-C₈-Aryl-, C₆-C₈-Aryloxy-, C₂-C₄-Alkenyl-, C₇-C₁₂-Arylalkyl-, C₇-C₁₂-Alkylaryl- oder C₈-C₁₂-Arylalkenylgruppe, oder Chlor bedeutet,
- E¹: ein Kohlenstoffatom bedeutet,
- R² und R³: gleich C₁-C₄-Alkyl wie Methyl, Ethyl oder C₆-C₁₄-Aryl wie Phenyl sind,
- q: gleich 1 ist, ausgenommen (Tetrahydroindenyl)-dimethylsilyl-(3-n-propylcyclopentadienyl)-zirkoniumdichlorid oder *-*dimethyl.

Die nachstehende Auflistung führt beispielhaft aber nicht limitierend erfindungsgemäße Metallocene auf.

Isopropyliden(cyclopentadienyl)(4,5,6,7-tetrahydroindenyl)zirkoniumdichlorid, Isopropyliden(cyclopentadienyl)(4,5,6,7-tetrahydroindenyl)hafniumdibromid,

Bevorzugt sind:
Isopropyliden(cyclopentadienyl)(4,5,6,7-tetrahydroindenyl)zirkoniumdichlorid,
Diphenylmethylen(cyclopentadienyl)(4,5,6,7-tetrahydroindenyl)zirkoniumdichlorid,
Methylphenylmethylen(cyclopentadienyl)(4,5,6,7-tetrahydroindenyl)zirkoniumdichlorid,
Isopropyliden(cyclopentadienyl)(4,5,6,7-tetrahydroindenyl)hafniumdichlorid,
Diphenylmethylen(cyclopentadienyl)(4,5,6,7-tetrahydroindenyl)hafniumdichlorid
Methylphenylmethylen(cyclopentadienyl)(4,5,6,7-tetrahydroindenyl)hafniumdichlorid,

Die erfindungsgemäßen Metallocene der Formel I werden durch Hydrierung von hydrierbaren Metallocenen hergestellt, wobei mindestens ein Metallocen mit mindestens einer hydrierbaren Doppelbindung (im Folgenden: das nichthydrierte Metallocen) in mindestens einem nichthalogenierten Lösungsmittel mit Wasserstoff in Gegenwart mindestens eines Hydrierungskatalysators behandelt wird.

Nichthydrierte Metallocene sind z.B. beschrieben in EP-A-344 882, EP-A-485 823, EP-A-416 566 oder EP-A-610 851.

Nichthydrierte Metallocene werden bevorzugt in nichthalogenierten aromatischen Lösungsmitteln und/oder in nichthalogenierten sauerstoffhaltigen aprotischen Lösungsmitteln hydriert. Auch Gemische der genannten Lösungsmittel können verwendet werden.

Der Begriff nichthydriertes Metallocen bezeichnet das Metallocen, aus dem das erfindungsgemäße teilhydrierte oder hydrierte Metallocen der Formel (I) hergestellt wird.

Das Hydrierungsprodukt ist ein Metallocen mit veränderter Struktur und veränderten Polymerisationseigenschaften, das sich vom eingesetzten nichthydrierten Metallocen dadurch unterscheidet, daß mindestens eine der im eingesetzten nichthydrierten Metallocen vorhandenen Doppelbindungen hydriert ist.

Die nachstehende Auflistung führt beispielhaft aber nicht limitierend nichthydrierte Metallocene auf.
Isopropyliden(cyclopentadienyl)(indenyl)zirkoniumdichlorid,
Isopropyliden(cyclopentadienyl)(indenyl)hafniumdibromid.

Neben dem nichthydrierten Metallocen können die Ausgangsstoffe als weitere Bestandteile anorganische Salze, wie NaCl, LiCl, KCl, KBr, MgCl₂, MgBr₂, MgBrCl, CaCl₂, AlCl₃ oder Filterhilfsmittel wie Na₂SO₄, Quarzmehl oder Celite enthalten. Weitere Bestandteile können auch organische und metallorganische Nebenkomponenten sein. Organische Nebenkomponenten sind Lösungsmittelreste, organische Verunreinigungen aus den Edukten, nicht umgesetzte Edukte und nicht vollständig umgesetzte Intermediate der Metallocensynthese. Metallorganische Nebenkomponenten können isomere Metallocene, oligomere Metallocene und solche Verbindungen sein, die bei der Herstellung des Rohstoffs entstanden sind oder durch Verunreinigungen der Ausgangsverbindungen eingetragen wurden. Metallorganische Nebenkomponenten sind alle Verbindungen, die mindestens eine Metall-Kohlenstoffbindung aufweisen, mit Ausnahme des nichthydrierten Metallocens selbst.

Als aromatische Lösungsmittel werden Lösungsmittel bezeichnet, die mindestens einen aromatischen Sechsring pro Molekül enthalten. Beispiele für nichthalogenierte aromatische Lösungsmittel sind Benzol, Toluol, Xylol (als Isomerengemisch), o-Xylol, m-Xylol, p-Xylol, Mesitylen, Tetralin, Anisol, Cumol, 1,2-Diethylbenzol, 1,3-Diethylbenzol, 1,4-Diethylbenzol, 1-Ethyl-2-methylbenzol, 1-Ethyl-3-methylbenzol, 1-Ethyl-4-methylbenzol. Bevorzugt sind Anisol, Toluol, Benzol, Xylole (als Gemisch oder Reinstoff) und Tetralin.

Zu den nichthalogenierten sauerstoffhaltigen aprotischen Lösungsmitteln zählen aromatische und aliphatische Ether wie Anisol, Ethylphenylether, Isopropylphenylether, Diethylether, Di-n-butylether, tert-Butylmethylether, Tetrahydrofuran, Dioxan. Daneben können auch Ester aliphatischer oder aromatischer Carbonsäuren als Lösungsmittel eingesetzt werden, beispielsweise Essigsäureethylester und Buttersäurepropylester.

Das Herstellungsverfahren bezieht sich auf einen Temperaturbereich vorzugsweise von 0°C bis 150 °C. Insbesondere wird die Hydrierung bei 15°C bis 100°C durchgeführt.

Als Hydrierkatalysatoren kommen solche Verbindungen oder Elemente in Frage, die unter den angewendeten Hydrierbedingungen das Lösungsmittel nicht oder nur teilweise hydrieren. Beispiele für solche Hydrierkatalysatoren sind Palladium auf Aktivkohle, Palladium auf Bariumsulfat, Palladium auf Aluminiumoxid, Palladiumschwarz, Palladiumschwamm, Platinoxid, Platinschwarz, Platinschwamm. Bevorzugt werden Palladiumkatalysatoren, insbesondere Palladium auf Aktivkohle.

Das Verfahren hat überraschenderweise viele Vorteile. Durch Verwendung nichthalogenierter (z.B. nichtchlorierter) Lösungsmittel können wirksamere Hydrierkatalystoren eingesetzt und die Reaktionen bereits bei relativ niedrigen Wasserstoffdrücken durchgeführt werden. Das ist besonders für technische Anwendungen interessant. Man vermeidet die unter Sicherheits- und Umweltaspekten bedenklichen halogenierten (z.B. chlorierten) Lösungsmittel. Durch Verwendung von nichthalogenierten aromatischen Kohlenwasserstoffen oder nichthalogenierten leicht polaren aprotischen Lösungsmitteln wie Ether wird die anschließende Aufarbeitung der Metallocene erleichtert. Bei den bevorzugten Lösungsmitteln wie Anisol, Toluol, Benzol, Xylol, tert-Butylmethylether und Tetrahydrofuran kann das Produkt bei erhöhter Temperatur vollständig gelöst, der Hydrierkatalysator abgetrennt und das Produktes kristallisiert werden, wobei ein breiterer Temperaturbereich bei Temperaturen oberhalb 0°C zur Verfügung steht, verglichen mit Dichlormethan. Dichlormethan wird im Stand der Technik bisher ausschließlich verwendet. Zur Kristallisation können daher tiefe Temperaturen (unter 0°C) vermieden werden. Durch die gute Löslichkeit der hydrierten Produkte in nichthalogenierten aromatischen Lösungsmitteln bei erhöhter Temperatur ist die Hydrierung sehr konzentrierter Metallocensuspensionen möglich, was im Hinblick auf eine gute Raum-Zeit-Ausbeute von Vorteil ist. Außerdem sind, verglichen mit bekannten Verfahren, die benötigten Mengen an Hydrierkatalysator wesentlich preiswerter. Für den Fall, daß Metallocene aus ihren Rohproduktgemischen mit aromatischen oder aprotisch aliphatischen Lösungsmitteln extrahiert werden, besteht die Möglichkeit, solche Extrakte als Lösung oder Suspension direkt und ohne Lösungsmittelwechsel einer nachgeschalteten Hydrierung zu unterwerfen.

Die erfindungsgemäßen Metallocene der Formel (I) eignen sich zur Herstellung eines Polyolefins durch Polymerisation von mindestens einem Olefins in Gegenwart eines Katalysators der mindestens einen Cokatalysator und mindestens ein Metallocen enthält. Unter dem Begriff Polymerisation wird eine Homopolymerisation wie auch eine Copolymerisation verstanden.

Die erfindungsgemäßen Metallocene der Formel (I) können zur Polymerisation eines oder mehrere Olefine der Formel R^{α} -CH=CH-R^{β} verwendet werden, worin R^{α} und R^{β} gleich oder verschieden sind und ein Wasserstoffatom oder einen Kohlenwasserstoffrest mit 1 bis 20 C-Atomen, insbesondere 1 bis 10 C-Atomen, bedeuten, und R^{α} und R^{β} zusammen mit den sie verbindenen Atomen einen oder mehrere Ringe bilden können. Beispiele für solche Olefine sind 1-Olefine mit 2 bis 40, bevorzugt 2-10 C-Atomen, wie Ethylen, Propylen, 1-Buten, 1-Penten, 1-Hexen, 4-Methyl-1-penten oder 1-Octen, Styrol, Diene wie 1,3-Butadien, Isopren, 1,4-Hexadien oder cyclische Olefine wie Norbornen oder Ethylidennorbornen.
Bevorzugt werden Ethylen oder Propylen homopolymerisiert, oder Ethylen mit einem oder mehreren cyclischen Olefinen, wie Norbornen, und/oder einem oder mehreren acyclischen 1-Olefinen mit 3 bis 20 C-Atomen, wie Propylen, und/oder einem oder mehreren Dienen mit 4 bis 20 C-Atomen, wie 1,3-Butadien oder 1,4-Hexadien, copolymerisiert. Beispiele solcher Copolymere sind Ethylen/Norbornen-Copolymere, Ethylen/Propylen-Copolymere und Ethylen/Propylen/ 1,4-Hexadien-Copolymere.

Die Polymerisation wird bevorzugt bei einer Temperatur von -60 bis 250 C, besonders bevorzugt 50 bis 200 C, durchgeführt. Der Druck beträgt bevorzugt 0,5 bis 2000 bar, besonders bevorzugt 5 bis 64 bar.

Die Polymerisation kann in Lösung, in Masse, in Suspension oder in der Gasphase, kontinuierlich oder diskontinuierlich, ein- oder mehrstufig durchgeführt werden. Eine bevorzugte Ausführungsform ist die Gasphasen- und Lösungspolymerisation.

Bevorzugt enthält der eingesetzte Katalysator eine Metallocenverbindung. Es können auch Mischungen zweier oder mehrerer Metallocenverbindungen eingesetzt werden, z. B. zur Herstellung von Polyolefinen mit breiter oder multimodaler Molmassenverteilung.

Prinzipiell ist als Cokatalysator jede Verbindung geeignet, die aufgrund ihrer Lewis-Acidität das neutrale Metallocen in ein Kation überführen und dieses stabilisieren kann ("labile Koordination"). Darüber hinaus sollte der Cokatalysator oder das aus ihm gebildete Anion keine weiteren Reaktionen mit dem gebildeten Metallocenkation eingehen (EP 427 697). Als Cokatalysator wird bevorzugt eine Aluminiumverbindung und/oder eine Borverbindung verwendet.

Die Borverbindung hat bevorzugt die Formel R^{a}ₓNH₄₋ₓBR^{b}₄, R^{a}ₓPH₄₋ₓBR^{b}₄, R^{a}₃CBR^{b}₄ oder BR^{b}₃, worin x eine Zahl von 1 bis 4, bevorzugt 3, bedeutet, die Reste R^{a} gleich oder verschieden, bevorzugt gleich sind, und C₁-C₁₀-Alkyl oder C₆-C₁₈-Aryl sind, oder zwei Reste R^{a} zusammen mit dem sie verbindenen Atomen einen Ring bilden, und die Reste R^{b} gleich oder verschieden, bevorzugt gleich sind, und C₆-C₁₈-Aryl sind, das durch Alkyl, Haloalkyl oder Fluor substituiert sein kann. Insbesondere steht R^{a} für Ethyl, Propyl, Butyl oder Phenyl und R^{b} für Phenyl, Pentafluorphenyl, 3,5-Bistrifluormethylphenyl, Mesityl, Xylyl oder Tolyl (EP 277 003, EP 277 004 und EP 426 638).

Bevorzugt wird als Cokatalysator eine Aluminiumverbindung wie Aluminoxan und/oder ein Aluminiumalkyl eingesetzt.

Besonders bevorzugt wird als Cokatalysator ein Aluminoxan, insbesondere der Formel C für den linearen Typ und/oder der Formel D für den cyclischen Typ verwendet, 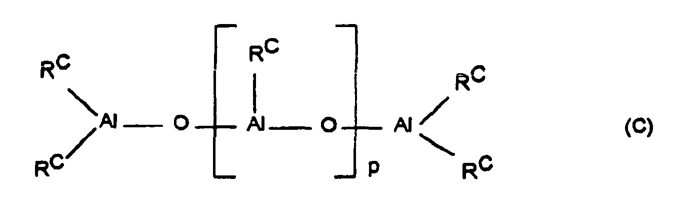 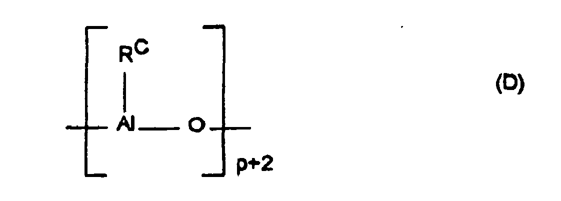 wobei in den Formeln C und D die Reste R^{C} gleich oder verschieden sind und Wasserstoff oder eine C₁-C₂₀-Kohlenwasserstoffgruppe wie eine C₁-C₁₈-Alkylgrupppe, eine C₆-C₁₈-Arylgruppe oder Benzyl bedeuten, und p eine ganze Zahl von 2 bis 50, bevorzugt 10 bis 35 bedeutet.
Bevorzugt sind die Reste R^{C} gleich und bedeuten Wasserstoff, Methyl, Isobutyl, Phenyl oder Benzyl, besonders bevorzugt Methyl.

Sind die Reste R^{C} verschieden, so sind sie bevorzugt Methyl und Wasserstoff oder alternativ Methyl und Isobutyl, wobei Wasserstoff oder Isobutyl bevorzugt in einem zahlenmäßigen Anteil von 0,01 bis 40 % (der Reste R^{C}) enthalten sind.

Die Verfahren zur Herstellung der Aluminoxane sind bekannt. Die genaue räumliche Stuktur der Aluminoxane ist nicht bekannt (J. Am. Chem. Soc. (1993) 115, 4971). Beispielsweise ist denkbar, daß sich Ketten und Ringe zu größeren zweidimensionalen oder dreidimensionalen Strukturen verbinden.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, die Metallocenverbindung vor dem Einsatz in der Polymerisationsreaktion mit einem Cokatalysator, insbesondere einem Aluminoxan vorzuaktivieren. Dadurch wird die Polymerisationsaktivität deutlich erhöht. Die Voraktivierung der Metallocenverbindung wird vorzugsweise in Lösung vorgenommen. Bevorzugt wird dabei die Metallocenverbindung in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösungsmenge. Das Metallocen kann in der gleichen Konzentration eingesetzt werden, vorzugsweise wird es jedoch in einer Menge von 10⁻⁴ bis 1 mol pro mol Aluminoxan eingesetzt. Die Voraktivierungsdauer beträgt 5 Minuten bis 60 Stunden, vorzugsweise 5 bis 60 Minuten. Man arbeitet bevorzugt bei einer Temperatur von -78° bis 100°C, vorzugsweise 0° bis 80°C.

Die Metallocenverbindung wird bevorzugt in einer Konzentration, bezogen auf das Übergangsmetall, von 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet. Das Aluminoxan, wird bevorzugt in einer Konzentration von 10⁻⁶ bis 10⁻¹ mol, vorzugsweise 10⁻⁵ bis 10⁻² mol pro dm³ Lösemittel bzw. pro dm³ Reaktorvolumen verwendet. Die anderen genannten Cokatalysatoren werden in etwa äquimolaren Mengen zu der Metallocenverbindung verwendet. Prinzipiell sind aber auch höhere Konzentrationen möglich.

Das Aluminoxan kann auf verschiedene Arten nach bekannten Verfahren hergestellt werden. Eine der Methoden ist beispielsweise, daß eine Aluminiumkohienwasserstoffverbindung und/oder ein Hydridoaluminiumkohlenwasserstoffverbindung mit Wasser (gasförmig, fest, flüssig oder gebunden - beispielsweise als Kristallwasser) in einem inerten Lösungsmittel (wie beispielsweise Toluol) umgesetzt wird. Zur Herstellung eines Aluminoxans mit verschiedenen Resten R^{C} werden beispielsweise entsprechend der gewünschten Zusammensetzung zwei verschiedene Aluminiumtrialkyle mit Wasser umgesetzt.

Zur Entfernung von im Olefin vorhandenen Katalysatorgiften ist eine Reinigung mit einer Aluminiumverbindung, bevorzugt einem Aluminiumalkyl, wie Trimethylaluminium oder Triethylaluminium, vorteilhaft. Diese Reinigung kann sowohl im Polymerisationssystem selbst erfolgen, oder das Olefin wird vor der Zugabe in das Polymerisationssystem mit der Aluminiumverbindung in Kontakt gebracht und anschließend wieder abgetrennt.

Als Molmassenregler und/oder zur Steigerung der Katalysatoraktivität kann in dem erfindungsgemäßen Verfahren Wasserstoff zugegeben werden. Hierdurch können niedermolekulare Polyolefine wie Wachse erhalten werden.
Bevorzugt wird die Metallocenverbindung mit dem Cokatalysator außerhalb des Polymerisationsreaktors in einem separaten Schritt unter Verwendung eines geeigneten Lösemittels umgesetzt. Dabei kann eine Trägerung vorgenommen werden.

Im dem Verfahren zur Herstellung eines Polyolefins kann mit Hilfe der Metallocenverbindung eine Vorpolymerisation erfolgen. Zur Vorpolymerisation wird bevorzugt das (oder eines der) in der Polymerisation eingesetzte(n) Olefin(e) verwendet.

Der eingesetzte Katalysator kann geträgert sein. Durch die Trägerung läßt sich beispielsweise die Kornmorphologie des hergestellten Polyolefins steuern. Dabei kann die Metallocenverbindung zunächst mit dem Träger und anschließend mit dem Cokatalysator umgesetzt werden. Es kann auch zunächst der Cokatalysator geträgert werden und anschließend mit der Metallocenverbindung umgesetzt werden. Auch ist es möglich das Reaktionsprodukt von Metallocenverbindung und Cokatalysator zu trägern. Geeignete Trägermaterialien sind beispielsweise Silikagele, Aluminiumoxide, festes Aluminoxan oder andere anorganische Trägermaterialien wie beispielsweise Magnesiumchlorid. Ein geeignetes Trägermaterial ist auch ein Polyolefinpulver in feinverteilter Form. Die Herstellung des geträgerten Cokatalysators kann beispielsweise wie in EP 567 952 beschrieben durchgeführt werden.

Vorzugsweise wird der Cokatalysator, z.B. Aluminoxan, auf einen Träger wie beispielsweise Silikagele, Aluminiumoxide, festes Aluminoxan, andere anorganische Trägermaterialien oder auch ein Polyolefinpulver in feinverteilter Form aufgebracht und dann mit dem Metallocen umgesetzt.

Als anorganische Träger können Oxide eingesetzt werden, die flammenpyrolytisch durch Verbrennung von Element-Halogeniden in einer Knallgas-Flamme erzeugt wurden, oder als Kieselgele in bestimmten Korngrößen-Verteilungen und Kornformen herstellbar sind.

Die Herstellung des geträgerten Cokatalysators kann beispielsweise wie in EP 578 838 beschrieben in der folgenden Weise in einem Edelstahl-Reaktor in explosionsgeschützter Ausführung mit einem Umpumpsystem der Druckstufe 60 bar, mit Inertgasversorgung, Temperierung durch Mantelkühlung und zweitem Kühlkreislauf über einen Wärmetauscher am Umpumpsystem erfolgen. Das Umpumpsystem saugt den Reaktorinhalt über einen Anschluß im Reaktorboden mit einer Pumpe an und drückt ihn in einen Mischer und durch eine Steigleitung über einen Wärmetauscher in den Reaktor zurück. Der Mischer ist so gestaltet, daß sich in dem Zulauf ein verengter Rohrquerschnitt befindet, wo eine erhöhte Strömungsgeschwindigkeit entsteht, und in dessen Turbulenzzone axial und entgegen der Strömungsrichtung eine dünne Zuleitung geführt ist, durch welche - getaktet - jeweils eine definierte Menge Wasser unter 40 bar Argon eingespeist werden kann. Die Kontrolle der Reaktion erfolgt über einen Probennehmer am Umpumpkreislauf.

Im Prinzip sind jedoch auch andere Reaktoren geeignet.

Im vorstehend beschriebenen Reaktor mit 16 dm³ Volumen werden 5 dm³ Decan unter Inertbedingungen vorgelegt. 0,5 dm³ (=5,2 mol) Trimethylaluminium werden bei 25 C zugefügt. Danach werden 250 g Kieselgel SD 3216-30 (Grace AG), welche vorher bei 120 C in einem Argonfließbett getrocknet wurden, durch einen Feststofftrichter in den Reaktor eindosiert und mit Hilfe des Rührers und des Umpumpsystems homogen verteilt. Eine Gesamtmenge von 76,5 g Wasser wird in Portionen von 0,1 cm³ während 3,25 Stunden jeweils alle 15 Sekungen in den Reaktor gegeben. Der Druck, herrührend vom Argon und den entwickelten Gasen, wird durch ein Druckregelventil konstant bei 10 bar gehalten. Nachdem alles Wasser eingebracht worden ist, wird das Umpumpsystem abgeschaltet und das Rühren noch 5 Stunden bei 25 C fortgesetzt.

Der in dieser Weise hergestellte geträgerte Cokatalysator wird als eine 10 %ige Suspension in n-Decan eingesetzt. Der Aluminiumgehalt ist 1,06 mmol Al pro cm³ Suspension. Der isolierte Feststoff enthält 31 Gew.-% Aluminium, das Suspensionsmittel enthält 0,1 Gew.-% Aluminium.

Weitere Möglichkeiten der Herstellung eines geträgerten Cokatalysators sind in EP 578 838 beschrieben.

Danach wird das erfindungsgemäße Metallocen auf den geträgerten Cokatalysator aufgebracht, indem das gelöste Metallocen mit dem geträgerten Cokatalysator gerührt wird. Das Lösemittel wird entfernt und durch einen Kohlenwasserstoff ersetzt, in dem sowohl Cokatalysator als auch das Metallocen unlöslich sind.

Die Reaktion zu dem geträgerten Katalysatorsystem erfolgt bei einer Temperatur von -20 bis +120°C, bevorzugt 0 bis 100°C, besonders bevorzugt bei 15 bis 40°C. Das Metallocen wird mit dem geträgerten Cokatalysator in der Weise umgesetzt, daß der Cokatalysator als Suspension mit 1 bis 40 Gew.-%, bevorzugt mit 5 bis 20 Gew.-% in einem aliphatischen, inerten Suspensionsmittel wie n-Decan, Hexan, Heptan, Dieselöl mit einer Lösung des Metallocens in einem inerten Lösungsmittel wie Toluol, Hexan, Heptan, Dichlormethan oder mit dem feingemahlenen Feststoff des Metallocens zusammengebracht wird. Umgekehrt kann auch eine Lösung des Metallocens mit dem Feststoff des Cokatalysators umgesetzt werden.

Die Umsetzung erfolgt durch intensives Mischen, beispielsweise durch Verrühren bei einem molaren Al/M¹-Verhältnis von 100/1 bis 10000/1, bevorzugt von 100/1 bis 3000/1 sowie einer Reaktionszeit von 5 bis 120 Minuten, bevorzugt 10 bis 60 Minuten, besonders bevorzugt 10 bis 30 Minuten unter inerten Bedingungen. Im Laufe der Reaktionszeit zur Herstellung des geträgerten Katalysatorsystems treten insbesondere bei der Verwendung der erfindungsgemäßen Metallocene mit Absorptionsmaxima im sichtbaren Bereich Veränderungen in der Farbe der Reaktionsmischung auf, an deren Verlauf sich der Fortgang der Reaktion verfolgen läßt.

Nach Ablauf der Reaktionszeit wird die überstehende Lösung abgetrennt, beispielsweise durch Filtration oder Dekantieren. Der zurückbleibende Feststoff wird 1- bis 5-mal mit einem inerten Suspensionsmittel wie Toluol, n-Decan, Hexan, Dieselöl, Dichlormethan zur Entfernung löslicher Bestandteile im gebildeten Katalysator, insbesondere zur Entfernung von nicht umgesetzten und damit löslichem Metallocen, gewaschen.

Das so hergestellte geträgerte Katalysatorsystem kann im Vakuum getrocknet als Pulver oder noch Lösemittel behaftet wieder resuspendiert und als Suspension in einem der vorgenannten inerten Suspensionsmittel in das Polymerisationssystem eindosiert werden.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Propan, Butan, Hexan, Heptan, Isooctan, Cyclohexan, Methylcyclohexan, genannt. Weiterhin kann eine Benzin- bzw. hydrierte Dieselölfraktion benutzt werden. Brauchbar ist auch Toluol. Bevorzugt wird im flüssigen Monomeren polymerisiert.

### Vergleichsbeispiel

3,0 g (6,9 mmol) rac-Isopropylidenbis(indenyl)zirkoniumdichlorid und 0,3 g (0,28 mmol) Palladium (10%ig auf Aktivkohle) wurden in 100 ml Toluol suspendiert und bei 50°C und einem Wasserstoffdruck von 60 bar hydriert. Nach 6 Stunden wurde die Reaktionsmischung heiß filtriert, mit 200 ml heißem Toluol extrahiert und auf 40 ml eingeengt. Bei 0-5°C kristallisierte das Produkt aus. Ausbeute: 1,9 g (4,3 mmol; 63%) rac-Isopropylidenbis(4,5,6,7-tetrahydroindenyl)zirkoniumdichlorid. ¹H-NMR (300 MHz, CDCl₃): d = 6,37 (d, 2 H); 5,48 (d, 2 H); 2,6-3,0 (m, 6 H); 2,3-2,5 (m, 2 H); 1,4-2,0 (m, 8H); 1,85 (s, 6 H).

## Patentansprüche

1. Metallocen der Formel I 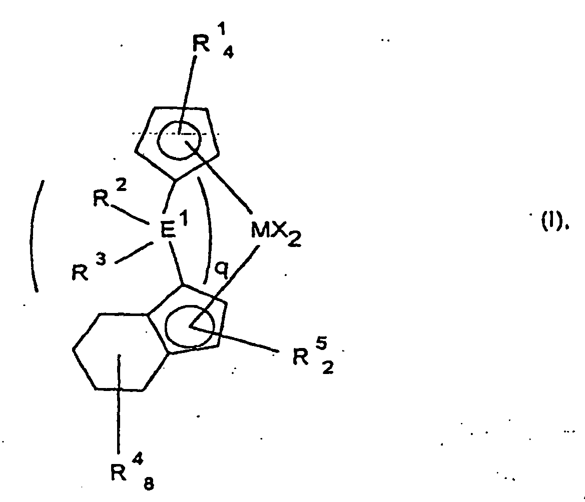 wobei
M Ti, Zr oder Hf bedeutet,
X gleich oder verschieden, ein Wasserstoffatom, eine C₁-C₄₀-Kohlenwasserstoffgruppe, OH⁻ Gruppe, ein Halogenatom oder ein Pseudohalogen bedeutet,
R¹ bis R⁵ jeweils gleich oder verschieden sind und unabhängig voneinander ein Wasserstoffatom, ein C₁-C₃₀-Kohlenwasserstoffrest oder einen kohlenstoffhaltigen Rest mit 1 bis 10 C-Atomen mit einem oder mehreren Heteroatomen der Reihe O, N, Si, Ge, P bedeuten, wobei je zwei benachbarte Reste R⁴ mit den sie verbindenden Kohlenstoffatomen ein Ringsystem bilden können,
E¹ ein Kohlenstoff-, Silizium-, Germanium- oder Zinnatom bedeuten und
q gleich 1 ist, ausgenommen (Tetrahydroindenyl)-dimethylsilyl-(3-n-propylcyclopentadienyl)-zirkonium-dichlorid oder - dimethyl.

2. Metallocen der Formel 1 nach Anspruch 1, wobei
M gleich Zirkonium oder Hafnium ist,
X eine C₁-C₄-Alkyl-, C₁-C₃-Alkoxy-, C₆-C₈-Aryl-, C₆-C₈-Aryloxy-, C₂-C₄-Alkenyl-, C₇-C₁₂-Arylalkyl-, C₇-C₁₂-Alkylaryl- oder C₈-C₁₂-Arylalkenylgruppe, oder Chlor bedeutet,
E¹ ein Kohlenstoffatom bedeutet,
R² und R³ gleich C₁-C₄-Alkyl oder C₆-C₁₄-Aryl sind.

3. Metallocen nach Anspruch 1 oder 2, wie
Isopropyliden(cyclopentadienyl)(4,5,6,7-tetrahydroindenyl)zirkoniumdichlorid,
Diphenylmethylen(cyclopentadienyl)(4,5,6,7-tetrahydroindenyl)zirkoniumdichlorid,
Methylphenylmethyten(cyclopentadienyl)(4,5,6,7-tetrahydroindenyl)zirkoniumdichlorid,
Isopropyliden(cyclopentadienyl)(4,5,6,7-tetrahydroindenyl)hafniumdichlorid,
Diphenylmethylen(cyclopentadienyl)(4,5,6,7-tetrahydroindenyl)hafniumdichlorid,
Methylphenylmethylen(cyclopentadienyl)(4,5,6,7-tetrahydroindenyl)hafniumdichlorid.

4. Metallocen nach einem oder mehreren der Ansprüche 1 bis 3, erhältlich durch Behandlung von mindestens einem Metallocen mit mindestens einer Doppelbindung und/oder mindestens einem aromatischen Substituenten in mindestens einem nicht halogenierten Lösungsmittel mit Wasserstoff in Gegenwart mindestens eines Hydrierungskatalysators.

5. Katalysator, enthaltend a) mindestens ein Metallocen gemäß einem oder mehreren der Ansprüche 1 bis 4 und b) mindestens einen Cokatalysator.

6. Katalysator gemäß Anspruch 5 in geträgerter und/oder vorpolymerisierter Form.

7. Verfahren zur Herstellung eines Olefinpolymers durch Polymerisation mindestens eines Olefins in Gegenwart eines Katalysators gemäß Anspruch 5 oder 6.

8. Verwendung eines Metallocens nach einem oder mehreren der Ansprüche 1 bis 4 zur Herstellung von Polyolefinen.

## Claims

1. A metallocene of the formula I 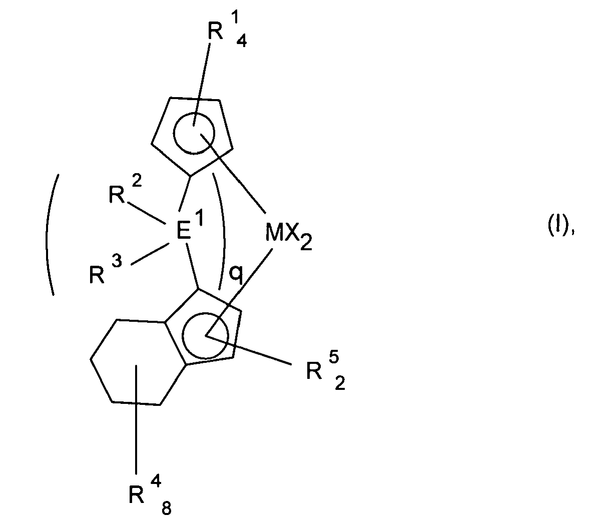 where
M is Ti, Zr or Hf,
X are identical or different and are each a hydrogen atom, a C₁-C₄₀-hydrocarbon group, an OH group, a halogen atom or a pseudohalogen,
R¹ to R⁵ are identical or different and, independently of one another, are each a hydrogen atom, a C₁-C₃₀-hydrocarbon radical or a carbon-containing radical having from 1 to 10 carbon atoms and one or more heteroatoms selected from the group consisting of O, N, Si, Ge and P, where in each case two adjacent radicals R⁴ together with the carbon atoms connecting them can form a ring system,
E¹ is a carbon, silicon, germanium or tin atom, and
q is 1, with the exception of (tetrahydroindenyl)dimethylsilyl(3-n-propylcyclopentadienyl) zirconium dichloride or (tetrahydroindenyl)dimethylsilyl(3-n-propylcyclopentadienyl)dimethylzirconium.

2. The metallocene of the formula I according to claim 1, wherein
M is zirconium or hafnium,
X is a C₁-C₄-alkyl, C₁-C₃-alkoxy, C₆-C₈-aryl, C₆-C₈-aryloxy, C₂-C₄-alkenyl, C₇-C₁₂-arylalkyl, C₇-C₁₂-alkylaryl or C₈-C₁₂-arylalkenyl group or chlorine,
E¹ is a carbon atom,
R² and R³ are C₁-C₄-alkyl or C₆-C₁₄-aryl.

3. The metallocene according to claim 1 or 2 such as isopropylidene(cyclopentadienyl)(4,5,6,7-tetrahydroindenyl)zirconium dichloride, diphenylmethylene(cyclopentadienyl)(4,5,6,7-tetrahydroindenyl)zirconium dichloride, methylphenylmethylene-(cyclopentadienyl)(4,5,6,7-tetrahydroindenyl)-zirconium dichloride, isopropylidene(cyclopentadienyl)(4,5,6,7-tetrahydroindenyl)hafnium dichloride, diphenylmethylene(cyclopentadienyl)(4,5,6,7-tetrahydroindenyl)hafnium dichloride, methylphenylmethylene(cyclopentadienyl)(4,5,6,7-tetrahydroindenyl)hafnium dichloride.

4. The metallocene according to one or more of claims 1 to 3 obtainable by treating at least one metallocene containing at least one double bond and/or at least one aromatic substituent in at least one non-halogenated solvent with hydrogen in the presence of at least one hydrogenation catalyst.

5. A catalyst comprising a) at least one metallocene according to one or more of claims 1 to 4 and b) at least one cocatalyst.

6. The catalyst according to claim 5 in supported and/or prepolymerized form.

7. A process for preparing an olefin polymer by polymerization of at least one olefin in the presence of a catalyst according to claim 5 or 6.

8. The use of a metallocene according to one or more of claims 1 to 4 for preparing polyolefins.

## Revendications

1. Métallocène de formule I : 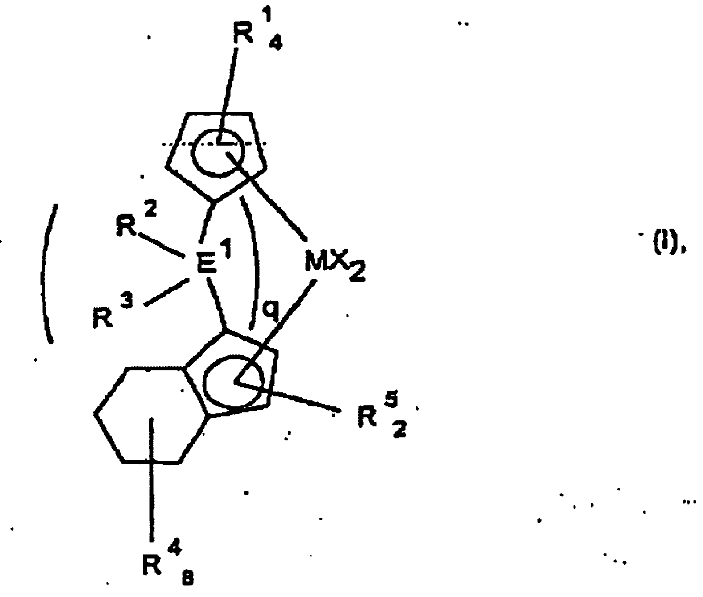 dans laquelle :
M représente l'élément Ti, Zr ou Hf,
les symboles X, ayant des significations identiques ou différentes, représentent un atome d'hydrogène, un groupe hydrocarboné en C₁-C₄₀, un groupe OH, un atome d'halogène ou un pseudo-halogène,
R¹ à R⁵, ayant respectivement des significations identiques ou différentes, représentent, indépendamment l'un de l'autre, un atome d'hydrogène, un radical hydrocarboné en C₁-C₃₀ ou un radical à teneur en carbone en C₁-C₁₀ contenant un ou plusieurs hétéroatomes de la série constituée de O, N, Si, Ge, P, deux groupes R⁴ adjacents respectifs pouvant former un système cyclique avec les atomes de carbone qui les relient,
E¹ représente un atome de carbone, de silicium, de germanium ou d'étain, et
q est égal à 1, excepté dans le cas du dichlorure de (tétrahydroindényl)-diméthylsilyl-(3-n-propyl-cyclopentadiényl)-zirconium ou du (tétrahydro-indényl)-diméthylsilyl-(3-n-propyl-cyclopentadiényl)-zirconium-diméthyle.

2. Métallocène de formule I selon la revendication 1, dans laquelle :
M représente le zirconium ou l'hafnium,
X représente un groupe alkyle en C₁-C₄, alcoxy en C₁-C₃, aryle en C₆-C₈, aryloxy en C₆-C₈, alcényle en C₂-C₄, arylalkyle en C₇-C₁₂, alkylaryle en C₇-Cₗ₂ ou arylalcényle en C₈-C₁₂, ou le chlore,
E¹ représente un atome de carbone,
R² et R³ représentent un groupe alkyle en C₁-C₄ ou aryle en C₆-C₁₄.

3. Métallocène selon la revendication 1 ou 2, tel que :
le dichlorure d'isopropylidène(cyclopentadiényl)-(4,5,6,7-tétrahydroindényl)zirconium,
le dichlorure de diphénylméthylène(cyclopentadiényl)-(4,5,6,7-tétrahydroindényl)zirconium,
le dichlorure de méthylphénylméthylène(cyclopentadiényl)-(4,5,6,7-tétrahydroindényl)zirconium,
le dichlorure d'isopropylidène(cyclopentadiényl)-(4,5,6,7-tétrahydroindényl)hafnium,
le dichlorure de diphénylméthylène(cyclopentadiényl)-(4,5,6,7-tétrahydroindényl)hafnium, ou
le dichlorure de méthylphénylméthylène(cyclopentadiényl)-(4,5,6,7-tétrahydroindényl)hafnium.

4. Métallocène selon une ou plusieurs des revendications 1 à 3, que l'on peut obtenir en traitant au moins un métallocène, ayant au moins une double liaison et/ou au moins un substituant aromatique dans au moins un solvant non halogéné, avec de l'hydrogène en présence d'au moins un catalyseur d'hydrogénation.

5. Catalyseur contenant a) au moins un métallocène selon une ou plusieurs des revendications 1 à 4 et b) au moins un catalyseur auxiliaire.

6. Catalyseur selon la revendication 5 sous une forme appliquée sur un support et/ou prépolymérisée.

7. Procédé de préparation d'un polymère d'oléfines par polymérisation d'au moins une oléfine en présence d'un catalyseur selon la revendication 5 ou 6.

8. Utilisation d'un métallocène selon une ou plusieurs des revendications 1 à 4 pour la préparation de polyoléfines.
